# EUROPÄISCHE PATENTSCHRIFT

(11) **EP 2 981 757 B1**
(45) Veröffentlichungstag und Bekanntmachung des Hinweises auf die Patenterteilung: **09.10.2019**
(21) Anmeldenummer: 14714296.2
(22) Anmeldetag: 02.04.2014
(51) Int. Cl.: F17C 3/08

(54) **AUFHÄNGEVORRICHTUNG FÜR EINEN IN EINEM AUSSENBEHÄLTER THERMISCH ISOLIERT ANGEORDNETEN INNENBEHÄLTER UND BEHÄLTERANORDNUNG**
SUSPENSION DEVICE FOR A THERMALLY ISOLATED INNER CONTAINER ARRANGED IN AN OUTER CONTAINER AND CONTAINER ASSEMBLY
DISPOSITIF DE SUSPENSION POUR UN RÉCIPIENT INTÉRIEUR ISOLÉ THERMIQUEMENT DISPOSÉ DANS UN RÉCIPIENT EXTÉRIEUR ET AGENCEMENT DE RÉCIPIENTS

(30) Priorität: 05.04.2013 EP 13162456
(43) Veröffentlichungstag der Anmeldung: 10.02.2016
(73) Patentinhaber: Cryoshelter GmbH, 8020 Graz (AT)
(72) Erfinder: REBERNIK, Matthias, A-8020 Graz (AT)
(74) Vertreter: Schwarz & Partner Patentanwälte OG
(86) Internationale Anmeldenummer: PCT/EP2014/056619
(87) Internationale Veröffentlichungsnummer: WO 2014/161899

(56) Entgegenhaltungen:
- WO-A1-2009/072897
- DD-A7- 281 318
- DD-A7- 281 319
- US-A- 3 115 983

## Beschreibung

Die Erfindung betrifft eine Anordnung eines Außenbehälters und eines im Außenbehälter thermisch isoliert angeordneten Innenbehälters.

Aus dem Dokument EP 0 014 250 A1 ist eine Aufhängevorrichtung für einen Tieftemperaturtank bekannt, mit der der Tieftemperaturtank thermisch isoliert in einem Außenbehälter aufgehängt ist. Die Aufhängevorrichtung weist mehrere Befestigungsbänder auf, die jeweils aus mehreren hintereinandergeschalteten Einzelelementen unterschiedlichen Fasermaterials zusammengesetzt sind und das tanknächste Einzelelement jedes Befestigungsbandes aus dem Fasermaterial mit dem vergleichsweise niedrigsten Wärmeausdehnungskoeffizienten besteht. Die Befestigungsbänder können nur Zugkräfte, aber keine Druckkräfte aufnehmen. Es ist deshalb notwendig, die Befestigungsbänder zu zwei an entgegengesetzten Endbereichen des Tieftemperaturtanks angreifenden Festlagern zu gruppieren, wobei die Zugkräfte der beiden Festlager in entgegengesetzten Richtungen wirken. Erst aus der Summe aller Befestigungselemente entsteht ein Festlager. Voraussetzung dazu ist eine geometrische Anordnung der Befestigungselemente, die die thermischen Längenänderungen der jeweiligen Behälter und der Befestigungsbänder selbst möglichst weitgehend ausgleicht, da sonst die thermischen Spannungen die Vorrichtung bis zur zulässigen Belastungsgrenze belasten.

Aus der DE 196 25 492 C1 ist ein toroidförmiger, mit Flüssighelium gefüllter Cryogentank bekannt, der über eine Aufhängevorrichtung koaxial in einem zylindrischen Außenbehälter an Bord eines Forschungssatelliten aufgehängt ist. Die Aufhängevorrichtung besteht aus einem oberen und einem unteren, jeweils fachwerkartig aus Zug- und Druckstäben zusammengesetzten Rechteckrahmen, und unter Vorspannung zwischen den jeweiligen Eckpunkten der Rechteckrahmen und dem Außenbehälter schräg verlaufenden Zugbändern. Der Cryogentank ist somit nur über die Zugbänder mit dem Außenbehälter verbunden. Die Zugbänder können nur Zugkräfte, aber keine Druckkräfte aufnehmen.

Aus dem Dokument US 3,115,983 ist ein Aufhängesystem für einen mehrwandigen kryogenen, kugelförmigen Flüssigkeitsspeichertank bekannt. Der Außenbehälter ruht auf Säulen auf, die sich von einem Fundament vertikal nach oben erstrecken. Der Außenbehälter ist mit dem Innenbehälter mittels einer Vielzahl von schlaufenförmigen Zugelementen 15 verbunden. Die Zugelemente sind um den Innendurchmesser des Außenbehälters herum verteilt und erstrecken sich im Zwischenraum zwischen Außenbehälter und Innenbehälter. Die Zugelemente sind einerseits mit ihren beiden Enden an paarweisen Basis-Stützelementen 14 an der Innenseite des Außenbehälters befestigt und umschlingen andererseits gekrümmte Seitenkanten von Auflageplatten 17, die an der Außenwand des Innenbehälters befestigt sind. Durch die Umschlingung ruhen aufgrund der Schwerkraft die Auflageplatten in den Zugelementen auf. Um zu verhindern, dass die Zugelemente von den gekrümmten Seitenkanten der Auflageplatten 17 herunterrutschen, sind Rückhaltelaschen 18 vorgesehen, die die Zugelemente aber nicht festklemmen. Da auf den Innenbehälter nur die Schwerkraft wirkt, sind die Zugelemente nur auf Zug belastet und können deshalb als Seile, Kabel oder Ketten ausgebildet sein. Es ist auch erwähnt, dass die Zugelemente als passend geformte starre Stäbe ausgebildet werden können, doch auch bei einer solchen Ausführungsform nehmen die Zugelemente keine Druckkräfte auf, da sich bei einer nach oben auf den Innenbehälter wirkenden Kraft die Auflageplatten von den Zugelementen abheben würden. Bei seitlichen Kräften auf den Innenbehälter würden die stabförmigen Zugelemente entlang der halbkreisförmigen Kanten der Auflageplatten verrutschen. Wie in dem Dokument erwähnt ist, sind solche Bewegungen zum Ausgleich von thermischen Spannungen erwünscht. Die Lagerung des Innenbehälters am Außenbehälter stellt somit, mechanisch gesehen, ein Loslager dar.

Wie allgemein bekannt, wird in der Mechanik zwischen Loslagern und Festlagern unterschieden. Ein Festlager überträgt in alle Richtungen im Raum wirkende Kräfte. Bei einem Loslager ist in einer oder zwei der drei Richtungen im Raum keine Verbindung vorhanden und somit keine Kraftübertragung in diese Richtung möglich. Ein Loslager lässt somit die Bewegung des gelagerten Körpers in zumindest eine Raumrichtung zu.

Das Dokument DE 103 45 958 A1 offenbart einen für den Einbau in Kraftfahrzeuge bestimmten Tank für kryogene Flüssigkeiten, bestehend aus einem Außenbehälter und einem darin in Zug- oder Druckstreben aufgehängten Innenbehälter. Die räumlich angeordneten Zug- oder Druckstreben gleichen Verlagerungen des Innenbehälters durch Wärmedehnungsdifferenzen aus. Um den gegensätzlichen Anforderungen in Kraftfahrzeugen optimal Rechnung zu tragen, sind zwischen Außenbehälter und Innenbehälter zusätzlich Anschläge und Stützflächen vorgesehen, die bei stillstehendem Fahrzeug auf Abstand und bei fahrendem Fahrzeug zur Anlage bringbar sind. Die Anschläge im Inneren des Außenbehälters wirken mit Stützflächen am Innenbehälter zusammen und sind mittels eines Aktuators verschiebbar. Bei stillstehendem Fahrzeug liegen die Anschläge nicht an den Stützflächen an. Der Innenbehälter ist dann nur mittels der Zug- oder Druckstreben mit dem Außenbehälter verbunden, was als ausreichend erachtet wird, da im Stillstand des Kraftfahrzeuges normalerweise keinerlei Erschütterungen auftreten. Die Zug- oder Druckstreben können somit sehr leicht und mit sehr kleinem Querschnitt ausgebildet sein, sodass sie nur minimale Wärmebrücken bilden. Für den Fahrbetrieb des Fahrzeugs wird der Anschlag in Anlage an der Stützfläche geschaltet. Nun ist der Innenbehälter spielfrei und fest mit dem Außenbehälter verbunden, der Innenbehälter ist somit im Außenbehälter festgelegt und die Zug- oder Druckstreben sind nicht belastet. Ein Festlager des Innenbehälters am Außenbehälter wird somit nur dann gebildet, wenn der Anschlag in Anlage an der Stützfläche geschaltet ist. Die Streben nehmen entweder Zugkräfte oder Druckkräfte auf und sind aufgrund ihres kleinen Querschnitts nicht geeignet, den Innentank im Fahrbetrieb zu lagern.

Das Dokument DD 281 319 A7 offenbart ein Lager für doppelwandige Behälter kryogener Medien und ist gleichermaßen für Standtanks und Transportbehälter des Straßen- und Schienentransportes einsetzbar. Das Lager ist aus mindestens drei Ringen oder Ringsegmenten aufgebaut, deren Enden mäanderförmig miteinander verbunden sind. Je nach dem, ob ein asymmetrischer oder symmetrischer Aufbau des Mäanders gewählt wurde, ist ein Ring. bzw. sind seine äußeren Ringe am Außenbehälter befestigt und ein Ring bzw. sein Zentralring steht lose mit dem Innenbehälter in Verbindung. Dieses Lager gestattet die Übertragung großer radialer Kräfte, nimmt aber keine nennenswerten axialen Kräfte auf. Es handelt sich somit um ein Loslager mit axialer Freigängigkeit, um thermische Längenänderungen des Innenbehälters zu kompensieren. Zwei derartige Loslager halten den Innenbehälter damit in radialer Richtung. Zur axialen Sicherung muss eines der beiden Loslager durch eine zusätzliche Maßnahme axial gestützt werden, wofür die Einbindung eines Konus vorgeschlagen wird. Erst durch Kombination der radialen Lagerung mit der axialen Abstützung entsteht ein Festlager.

Das Dokument DD 281 318 A7 offenbart ein Lager für doppelwandige Behälter kryogener Medien und ist gleichermaßen für Standtanks und Transportbehälter des Straßen- und Schienentransportes einsetzbar. Das Lager ist als mäanderförmiges Hohlprofil gestaltet, das in seiner Längsachse einen Zentralflansch trägt, welcher mit dem Innenbehälter in Verbindung steht, während das äußere Ende des Hohlprofils andererseits am Außenbehälter gehaltert ist. Ein einzelnes Lagerelement - bestehend aus mäanderförmigem Hohlprofil mit einem Zentralflansch - stellt ein Loslager dar. Da es zur Vermeidung thermischer Spannungen nicht fix mit dem Innenbehälter verbunden wird, stellt es genau gesagt ein nur auf Druck belastbares Loslager dar. Ein Festlager im technischen Sinn wird erst durch mehrere in Raumrichtungen zueinander versetzte Lager erzielt. Die Lager sind in einem als Ringspalt bezeichneten ringförmigen Bauraum zwischen dem Innenbehälter und dem Außenbehälter angeordnet.

Es besteht nach wie vor das Bedürfnis an einer in einer Behälteranordnung angeordneten hochstabilen und steifen Aufhängevorrichtung für einen in einem Außenbehälter thermisch isoliert angeordneten Innenbehälter. Auch wenn hohe dynamische Kräfte auf den Außenbehälter und den Innenbehälter sowie die Aufhängevorrichtung wirken, wie sie z.B. bei Verwendung in Fahrzeugen oder bei Stößen auftreten, müssen die Stabilität und Steifigkeit der Aufhängevorrichtung gewahrt und Kräfte verteilt ohne hohe lokale Kraftspitzen in die Behälter eingeleitet werden. Es ist insbesondere eine Aufgabe der Erfindung eine Behälteranordnung zu entwickeln, mit der thermisch isolierte Anordnung eines Innenbehälters in einem Außenbehälter realisierbar ist, die hochsteif und sehr tragfähig ist, ohne oder mit vergleichsweise geringen spezifischen Versteifungsmaßnahmen an den Behältern . Es ist auch eine Aufgabe der Erfindung eine Behälteranordnung zu schaffen, die billig zu fertigen und einfach zu montieren ist.

Die vorliegende Erfindung löst diese Aufgabe durch Bereitstellen einer Behälteranordnung gemäss Anspruch 1.

Eine Fachwerkskonstruktion aus Faserverbundwerkstoffen ist relativ einfach herstellbar und leicht in die Behälteranordnung einbaubar. Gegebenenfalls können auch weiter unten beschriebene Loslager-Befestigungselemente als Fachwerkselemente einer Rahmenkonstruktion oder als Platten oder als Platten einer Rahmenkonstruktion ausgebildet sein.

Die thermische Isolation zwischen Innenbehälter und Außenbehälter erfolgt bevorzugt durch Evakuierung des Zwischenraums.

Durch die erfindungsgemäße Behälteranordnung werden Kräfte in Bereiche hoher Steifigkeit der Behälter eingeleitet. Die Angriffspunkte der Festlager-Befestigungselemente am Innenbehälter liegen radial näher zum Umfang des Innenbehälters als zur Längsachse des Innenbehälters. Die Angriffspunkte der Festlager-Befestigungselemente am Außenbehälter liegen radial näher zum Umfang des Außenbehälters als zur Längsachse des Außenbehälters. Bevorzugt liegen die Angriffspunkte der Festlager-Befestigungselemente am Außenbehälter an der Umfangswand des Außenbehälters.

Die Funktion eines Festlagers wird gemäß der Erfindung durch die Anbringung der Festlager-Befestigungselemente im ringförmigen Bauraum mit zueinander räumlich versetzten Hauptrichtungsachsen erreicht. Die Festlager-Befestigungselemente sind sowohl am Innenbehälter wie auch am Außenbehälter bzw. am Loslagerring fest, d.h. auf Zug und Druck belastbar, verbunden. Die Festlagerfunktion entsteht aus der Summenwirkung der Kraftübertragung der einzelnen Festlager-Befestigungselemente. Auch bei den nachfolgend beschriebenen Loslagern sind die Loslager -Befestigungselemente sowohl am Innenbehälter oder am Außenbehälter als auch am Loslagerring fest, d.h. auf Zug und Druck belastbar, verbunden.

Unter dem Begriff "radial" versteht der Fachmann "in die Richtung eines Radius verlaufend" bzw. bei geometrischen Formen, die keinen Radius aufweisen, "von einem Mittelpunkt strahlenförmig ausgehend oder auf ihn hinzielend". Als Mittelpunkt kann in einer Querschnittsansicht eines geometrischen Körpers mit einer Achse die in der Querschnittsansicht als Punkt dargestellte, normal aus der Zeichenebene tretende Achse angesehen werden. In dieser Schrift wird der Begriff "radial" im Sinne von "in einer Normalebene zur Längsachse entlang der Hauptabmessung der Behälter" verstanden und ist zur Verdeutlichung auch in etlichen der beiliegenden Zeichnungen so dargestellt.

Unter dem Begriff "axial" versteht der Fachmann "in der Achse" bzw. "längs der Achse". Unter dem Begriff "Längsachse" wird eine Achse entlang der Hauptabmessung (= größte Erstreckung) eines Körpers verstanden.

Die Festlager-Befestigungselemente sind steife Fachwerkselemente oder Platten. Bevorzugt bestehen die Festlager-Befestigungselemente im Wesentlichen aus

Faserverbundwerkstoffen, vorzugsweise mit Aramidfasern, Kohlefasern, Glasfasern, Basaltfasern oder Kombinationen daraus, besonders bevorzugt mit Aramidfasern, die abschnittsweise mit Glasfasern gemischt sind, weil diese Materialien die erforderliche Steifigkeit aufweisen.

Der Begriff "ein einzelnes Festlager" ist so zu verstehen, dass das Festlager mit seinen Befestigungselementen nur an einem Abschnitt des Innenbehälters angreift, wobei dieser Abschnitt quer zu einer Längsachse des Innenbehälters ringförmig um eine Umfangswand des Innenbehälters oder an einer Stirnwand des Innenbehälters im Abstand von dessen Längsachse verläuft. Es ist kein weiteres Festlager vorgesehen, sondern entweder wird der Innenbehälter frei kragend nur durch dieses eine Festlager gehalten, oder es ist zusätzlich ein Loslager vorgesehen, das in einem Abstand vom Festlager am Innenbehälter angreift.

Die Festlager-Befestigungselemente sind in einem zwischen Innenbehälter und Außenbehälter definierten ringförmigen Bauraum angeordnet, der sich vorzugsweise um den Umfang des Innenbehälters herum erstreckt, aber auch teilweise entlang eines von der Längsachse des Innenbehälters beabstandeten Abschnitts einer stirnseitigen Wand verlaufen kann. Der ringförmige Bauraum kann geometrisch auch als Hohlprofil angesehen werden.

Wie erwähnt stehen die Festlager-Befestigungselemente schräg auf die Längsachse des Innenbehälters. Dadurch werden die von den Befestigungselementen in die Wände des Innenbehälters und des Außenbehälters eingeleiteten Kräfte unabhängig von der Angriffsrichtung dynamischer Kräfte sehr gleichmäßig verteilt und die Auslenkung des Innenbehälters gering gehalten. Diese Wirkungen werden besonders gut erzielt, wenn die Festlager-Befestigungselemente jeweils paarweise an einer die Innenbehälter-Längsachse enthaltenden Ebene gespiegelt sind. Bei einer Ausführungsform der erfindungsgemäßen Behälteranordnung die besonders hohen Verdrehwiderstand bietet, schneiden die, insbesondere als Fachwerkselemente ausgebildeten, Festlager-Befestigungselemente die Längsachse des Innenbehälters nicht, oder in anderen Worten sind die Festlager-Befestigungselemente windschief zur Längsachse des Innenbehälters angeordnet.

Wenn die Festlager-Befestigungselemente, insbesondere plattenförmige Festlager-Befestigungselemente Schubkräfte aufnehmend angeordnet sind, ergibt sich eine weitere Erhöhung der Stabilität der Aufhängevorrichtung.

Eine Optimierung der gleichmäßigen Verteilung der von den Befestigungselementen in die Wände des Innenbehälters und des Außenbehälters eingeleiteten Kräfte wird erreicht, wenn die Angriffspunkte der Festlager-Befestigungselemente am Innenbehälter in einer Normalebene zur Längsachse des Innenbehälters liegen und/oder wenn die Angriffspunkte der Festlager-Befestigungselemente am Außenbehälter in einer Normalebene zur Längsachse des Außenbehälters liegen.

Für eine besonders kurze Behälteranordnung ist es zweckmäßig, wenn die Angriffspunkte der Festlager-Befestigungselemente am Innenbehälter vom Zentrum des Innenbehälters axial weiter entfernt sind als die Angriffspunkte der Befestigungselemente am Außenbehälter.

Der geringste radiale Isolationsspalt der Aufhängevorrichtung wird erreicht, wenn die Angriffspunkte der Festlager- Befestigungselemente am Innenbehälter axial näher am Zentrum des Innenbehälters liegen als die Angriffspunkte der Festlager-Befestigungselemente am Außenbehälter.

Eine bevorzugte Ausführungsform der erfindungsgemäßen Behälteranordnung umfasst ein im Außenbehälter angeordnetes, den Innenbehälter stützendes Loslager, das mit einem Loslagerring ausgebildet ist, wobei auf Zug und Druck beanspruchbare Loslager-Befestigungselemente ringförmig verteilt einerseits am Loslagerring und andererseits am Innenbehälter oder am Außenbehälter angreifen, wobei die Loslager-Befestigungselemente in einem ringförmigen Bauraum angeordnet sind, der sich vorzugsweise um den Umfang des Innenbehälters herum erstreckt, wobei vorzugsweise der Loslagerring mittels Zugfedern oder Druckfedern vorgespannt ist. Wenn die Loslager-Befestigungselemente am Loslagerring und am Innenbehälter angreifen, so ist der Loslagerring verschiebbar im Außenbehälter angeordnet. Wenn die Loslager-Befestigungselemente am Loslagerring und am Außenbehälter angreifen, so ist der Innenbehälter verschiebbar im Loslagerring angeordnet.

Bevorzugt stehen die Loslager-Befestigungselemente schräg auf die Längsachse des Innenbehälters. Insbesondere stehen die Loslager-Befestigungselemente nicht normal auf die Längsachse des Innenbehälters. Bei dieser Ausführungsform werden die von den Befestigungselementen in die Wände des Innenbehälters bzw. Außenbehälters eingeleiteten Kräfte unabhängig von der Angriffsrichtung dynamischer Kräfte gut verteilt. Eine besonders gleichmäßige Verteilung dynamischer Kräfte wird erreicht, wenn die Loslager-Befestigungselemente jeweils paarweise an einer die Innenbehälter-Längsachse enthaltenden Ebene gespiegelt sind.

Für eine besonders kurze Behälteranordnung ist es zweckmäßig, wenn die Angriffspunkte der Loslager-Befestigungselemente am Innenbehälter vom Zentrum des Innenbehälters axial weiter entfernt sind als die Angriffspunkte der Loslager-Befestigungselemente am Loslagerring. In einer alternativen Ausführungsform sind die Angriffspunkte der Loslager-Befestigungselemente am Außenbehälter vom Zentrum des Innenbehälters axial weiter entfernt als die Angriffspunkte der Loslager-Befestigungselemente am Loslagerring.

Ein geringer Isolationsspalt wird erzielt, wenn die Angriffspunkte der Loslager-Befestigungselemente am Innenbehälter näher zum Zentrum des Innenbehälters liegen als die Angriffspunkte der Befestigungselemente am Loslagerring. In einer alternativen Ausführungsform liegen die Angriffspunkte der Loslager-Befestigungselemente am Außenbehälter näher am Zentrum des Innenbehälters als die Angriffspunkte der Befestigungselemente am Loslagerring.

Die Loslager-Befestigungselemente sollen aus einem möglichst steifen Material bestehen. Bevorzugt sind Faserverbundwerkstoffe, vorzugsweise mit Aramidfasern, Kohlefasern, Glasfasern, Basaltfasern oder Kombinationen daraus, besonders bevorzugt mit Aramidfasern, die abschnittsweise mit Glasfasern gemischt sind.

In einer Ausgestaltung der Erfindung sind die Loslager-Befestigungselemente als Fachwerkselemente einer Rahmenkonstruktion oder als Platten oder als Platten einer Rahmenkonstruktion ausgebildet. Eine Fachwerkskonstruktion aus Faserverbundwerkstoffen ist relativ einfach herstellbar und leicht in die Behälteranordnung einbaubar.

Für eine optimale thermische Isolierung ist zwischen Außenbehälter und Innenbehälter zumindest ein Strahlungsschild angeordnet. Damit eine möglichst geringe thermische Leitung zwischen dem Strahlungsschild und dem Innenbehälter besteht, ist vorgesehen, dass zumindest ein Strahlungsschild direkt an Befestigungselementen der Aufhängevorrichtung montiert ist. An zumindest einem dieser Strahlungsschilde können auch weitere Strahlungsschilde montiert sein.

Die Erfindung wird nun anhand von Ausführungsbeispielen unter Bezugnahme auf die Zeichnungen näher erläutert. Die Figuren 1-7, 9A, 9B, 10A, 10B zeigen Anordnungen, die nicht Gegenstand der Erfindung sind.
Fig. 1 zeigt eine Behälteranordnung schematisch in Längsansicht.
Fig. 2 zeigt einen geometrischen ringförmigen Bauraum, in dem die Befestigungselemente angeordnet sind.
Figuren 3 bis 5 zeigen Variationen für die Positionierung der Festlager-Befestigungselemente innerhalb des ringförmigen Bauraums.
Fig. 6 zeigt eine Behälteranordnung schematisch in Längsansicht.
Fig. 7 zeigt eine Behälteranordnung schematisch in Längsansicht.
Fig. 8 zeigt eine Ausführungsform einer erfindungsgemäßen Behälteranordnung, bei der die Behälter als Quader mit gerundeten Kanten ausgebildet sind.
Fig. 9A und Fig. 9B zeigen ein Loslager der erfindungsgemäßen Behälteranordnung
Fig. 10A und Fig. 10B zeigen ein Festlager in Vorderansicht und in isometrischer Ansicht.
Fig. 11 zeigt eine Ausführungsform einer erfindungsgemäßen Behälteranordnung, bei der die Behälter als Quader mit gerundeten Kanten und die Festlager-Befestigungselemente als Platten einer Rahmenkonstruktion ausgebildet sind.
Fig. 12 zeigt eine Ausführungsform einer erfindungsgemäßen Behälteranordnung, bei der die Behälter als Quader mit gerundeten Kanten und die Festlager-Befestigungselemente als Platten ausgebildet sind.
Fig. 13 zeigt eine Ausführungsform einer erfindungsgemäßen Behälteranordnung, bei der die Behälter als Zylinder und die Festlager-Befestigungselemente als Platten einer Rahmenkonstruktion ausgebildet sind.
Fig. 14 zeigt eine Ausführungsform einer erfindungsgemäßen Behälteranordnung, bei der die Behälter als Zylinder und die Festlager-Befestigungselemente als Platten ausgebildet sind.
Fig. 15 zeigt eine alternative Ausführungsform einer erfindungsgemäßen Behälteranordnung schematisch in Längsansicht.
Fig. 16 zeigt eine weitere Ausführungsform einer erfindungsgemäßen Behälteranordnung schematisch in Längsansicht.

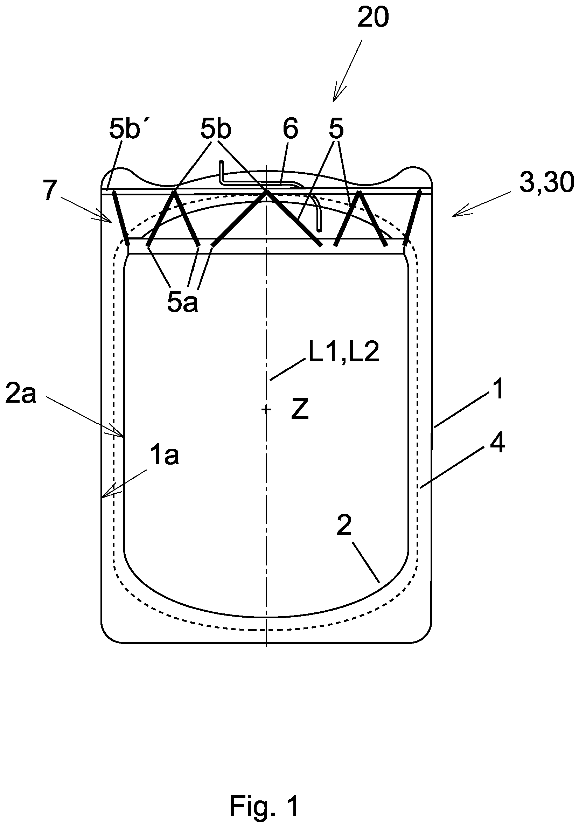

Fig. 1 zeigt eine Behälteranordnung 20, die einen Außenbehälter 1 und einen im Außenbehälter 1 thermisch isoliert angeordneten Innenbehälter 2 zur Aufnahme kryogener Medien und/oder Vorrichtungen umfasst, die durch eine allgemein mit 3 bezeichnete Aufhängevorrichtung miteinander verbunden sind. Die thermische Isolierung des Innenbehälters 2 vom Außenbehälter 1 erfolgt durch Evakuierung des Zwischenraums zwischen den beiden Behältern. Der Außenbehälter 1 weist eine zentrale Längsachse L1 auf; der Innenbehälter 2 weist eine zentrale Längsachse L2 auf, auf der der Zentrumspunkt Z des Innenbehälters 2 liegt. Die beiden Längsachsen L1, L2 sind koaxial angeordnet. Die Befüllung des Innenbehälters erfolgt durch zumindest eine Leitung 6. Zwischen dem Außenbehälter 1 und dem Innenbehälter 2 ist ein Strahlungsschild 4 angeordnet, das direkt an Festlager-Befestigungselementen 5 montiert ist. Optional können weitere Strahlungsschilde vorgesehen werden, die einander umgeben, wobei die weiteren Strahlungsschilde entweder an einem benachbarten Strahlungsschild oder ebenfalls an den Festlager-Befestigungselementen 5 montiert werden können.

Die Aufhängevorrichtung 3 der Behälteranordnung 20 besteht aus einem einzigen Festlager 30, das einerseits am Außenbehälter 1 und andererseits am Innenbehälter 2 angreifende, auf Zug und Druck beanspruchbare Festlager-Befestigungselemente 5 umfasst, wobei die Festlager-Befestigungselemente 5 ringförmig am Umfangsbereich des Innenbehälters 2 verteilt direkt oder indirekt (z.B. über einen Anbindungsring) an der Außenwand 2a des Innenbehälters 2 angreifen. Die Angriffspunkte 5a der Festlager-Befestigungselemente 5 an der Außenwand 2a liegen ringförmig verteilt in einer Ebene, die orthogonal auf die Längsachse L2 des Innenbehälters 2 steht. Die Festlager-Befestigungselemente 5 greifen mit weiteren Angriffspunkten 5b entweder direkt oder - wie in Fig. 1 gezeigt - indirekt über einen Anbindungsring 5b' am Umfangsbereich der Innenwand 1a des Außenbehälters 1 an.

Die Festlager-Befestigungselemente 5 sind steife Elemente aus Faserverbundwerkstoffen, vorzugsweise mit Aramidfasern, Kohlefasern, Glasfasern, Basaltfasern oder Kombinationen daraus, besonders bevorzugt mit Aramidfasern, die abschnittsweise mit Glasfasern gemischt sind. Die Festlager-Befestigungselemente 5 sind am Außenbehälter 1 und am Innenbehälter 2 durch Schrauben, Nieten, Bolzen, die den Vorteil der Drehbarkeit aufweisen, Kleben, Klemmen, Einhängen, etc. fixiert.

Da nur ein einzelnes Festlager 30 vorgesehen ist, hängt der Innenbehälter 2 frei kragend im Außenbehälter 1. Da die Festlager-Befestigungselemente 5 am Außenumfang des Innenbehälters 2 und am Innenumfang des Außenbehälters 1 angreifen, können sehr hohe Kräfte abgestützt werden. Somit können im Vergleich zum Stand der Technik größere Innenbehälter 2 ohne Loslager ausgeführt werden. Der Freiraum zwischen Innenbehälter 2 und Außenbehälter 1 ist evakuiert. Da die Leitung 6 durch dieses Vakuum geführt ist, wird zusätzlich die thermische Isolationsfähigkeit der Behälteranordnung 20 verbessert.

Die Festlager-Befestigungselemente 5 stehen schräg auf die Längsachse L2 des Innenbehälters 2 und sind jeweils paarweise an einer die Innenbehälter-Längsachse L2 enthaltenden Ebene gespiegelt. Die Angriffspunkte 5a der Festlager-Befestigungselemente 5 am Innenbehälter 2 liegen axial näher zum Zentrum Z des Innenbehälters 2 als die Angriffspunkte 5b der Festlager-Befestigungselemente 5 am Außenbehälter 1.

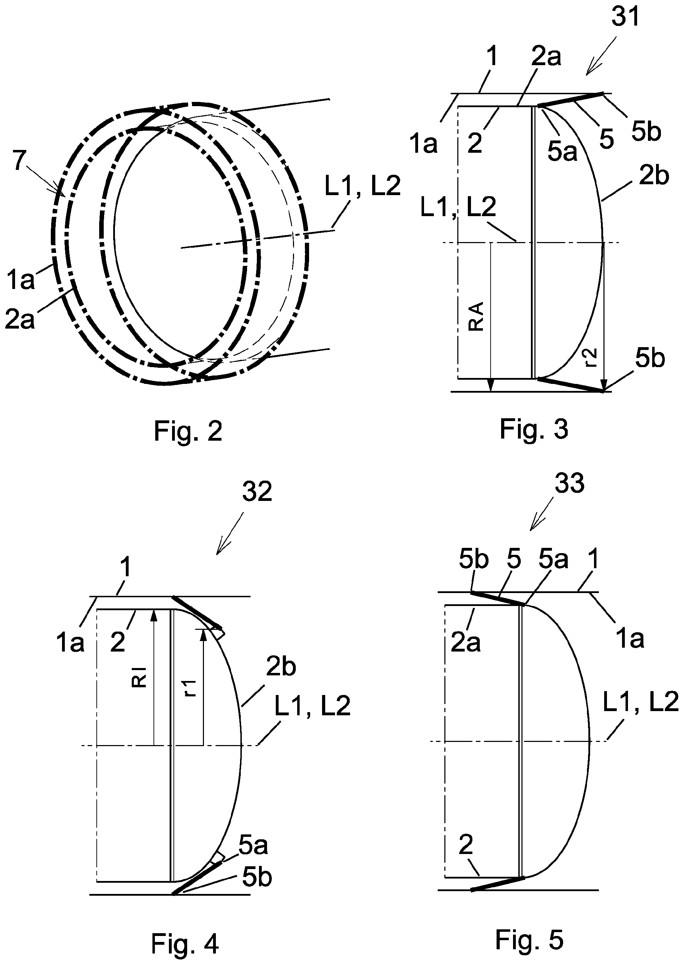

In geometrischer Hinsicht sind die Festlager-Befestigungselemente 5 in einem zwischen der Außenwand 2a des Innenbehälters 2 und der Innenwand 1a des Außenbehälters 1 definierten ringförmigen Bauraum 7 angeordnet, wie insbesondere in Fig. 2 dargestellt ist.

Die Figuren 3 bis 5 zeigen ausschnittsweise geometrische Variationsmöglichkeiten für die Positionierung der Festlager-Befestigungselemente 5 innerhalb des ringförmigen Bauraums des Festlagers.

Fig. 3 zeigt ein Festlager 31, bei dem die Angriffspunkte 5a der Festlager-Befestigungselemente 5 am Innenbehälter 2 an einem Umfangskreis liegen, der im Bereich des Übergangs von der Umfangswand 2a zur Stirnwand 2b definiert ist. Die Angriffspunkte 5b der Festlager-Befestigungselemente 5 liegen an einem Umfangskreis an der Innenwand 1a des Außenbehälters 1 und sind vom Zentrum des Innenbehälters axial weiter entfernt als die Angriffspunkte 5a am Innenbehälter 2. Allgemein formuliert, liegen die Angriffspunkte 5b radial (Pfeil r2) näher zum Umfang (Pfeil RA) des Außenbehälters 1 als zu dessen Längsachse L1, wobei im gezeigten Spezialfall die Länge der Pfeile RA und r2 gleich groß ist, da die Angriffspunkte 5b direkt am Umfang der Innenwand 1a des Außenbehälters 1 liegen.

Fig. 4 zeigt ein Festlager 32, bei dem die Angriffspunkte 5a der Festlager-Befestigungselemente 5 am Innenbehälter 2 an einem an der Stirnwand 2b definierten Kreis liegen. Zu beachten ist, dass die Angriffspunkte 5a radial (Pfeil rl) näher zum Umfang (Pfeil RI) des Innenbehälters 2 als zur Längsachse L2 des Innenbehälters liegen. Die Angriffspunkte 5b der Festlager-Befestigungselemente 5 liegen an einem Umfangskreis an der Innenwand 1a des Außenbehälters 1 und sind axial näher zum Zentrum des Innenbehälters 2 positioniert als die Angriffspunkte 5a am Innenbehälter 2.

Fig. 5 zeigt ein der Fig. 4 ähnelndes Festlager 33, bei dem die Angriffspunkte 5b der Festlager-Befestigungselemente 5 ebenfalls an einem Umfangskreis an der Innenwand 1a des Außenbehälters 1 liegen. Weiters sind die Angriffspunkte 5b am Außenbehälter 1 axial näher zum Zentrum des Innenbehälters 2 positioniert als die Angriffspunkte 5a am Innenbehälter 2. Im Unterschied zur Fig. 4 ist bei der Ausführungsform des Festlagers 33 gemäß Fig. 5 die Kreislinie, auf der die Angriffspunkte 5a am Innenbehälter 2 liegen, auf der Umfangs-Außenwand 2a definiert.

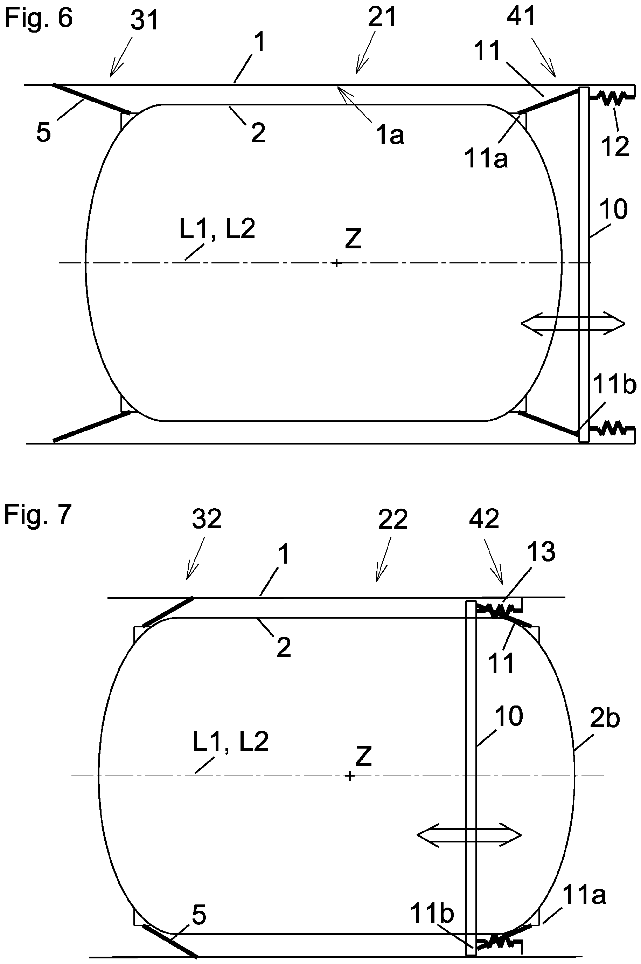

Fig. 6 zeigt eine Behälteranordnung 21 mit dem Außenbehälter 1 mit einer Längsachse L1 und dem im Außenbehälter 1 thermisch isoliert angeordneten Innenbehälter 2 mit einer Längsachse L2. Die beiden Behälter 1, 2 sind koaxial zueinander angeordnet und durch eine Aufhängevorrichtung miteinander verbunden, die das oben beschriebene Festlager 31 und zusätzlich ein Loslager 41 umfasst. Das Loslager 41 besitzt einen entlang der Innenwand 1a des Außenbehälters 1 axial verschiebbar (siehe Doppelpfeil) gelagerten Loslagerring 10 aus einem steifen Material, wie z.B. faserverstärktem Kunststoff oder Metall bzw.
Metalllegierungen. Auf Zug und Druck beanspruchbare Loslager-Befestigungselemente 11 greifen ringförmig verteilt einerseits am Loslagerring 10 und andererseits am Innenbehälter 2 an. Der Loslagerring 10 ist mittels direkt oder indirekt am Außenbehälter 1 angreifenden Zugfedern 12 vorgespannt. Die Loslager-Befestigungselemente 11 sind geometrisch gesehen (analog zur Darstellung von Fig. 2) in einem ringförmigen Bauraum angeordnet, der sich im Wesentlichen um den Umfang des Innenbehälters 2 herum erstreckt. Die Loslager-Befestigungselemente 11 sind aus einem möglichst steifen Material gefertigt. Sehr gut eignen sich Faserverbundwerkstoffe, vorzugsweise mit Aramidfasern, Kohlefasern, Glasfasern, Basaltfasern oder Kombinationen daraus, besonders bevorzugt mit Aramidfasern, die abschnittsweise mit Glasfasern gemischt sind.

Die Loslager-Befestigungselemente 11 stehen schräg auf die Längsachse L2 des Innenbehälters 2 und sind jeweils paarweise an einer die Innenbehälter-Längsachse L2 enthaltenden Ebene gespiegelt. Die Angriffspunkte 11a der Loslager-Befestigungselemente 11 am Innenbehälter 2 liegen näher zum Zentrum Z des Innenbehälters 2 als die Angriffspunkte 11b der Befestigungselemente 11 am Loslagerring 10.

Fig. 7 zeigt eine Variante einer Behälteranordnung 22 mit dem Außenbehälter 1 und dem im Außenbehälter 1 thermisch isoliert angeordneten Innenbehälter 2. In dieser Variante umfasst die Aufhängevorrichtung, die die beiden Behälter 1, 2 miteinander verbindet, das oben anhand der Fig. 4 beschriebene Festlager 32 und zusätzlich eine Variante eines Loslagers 42, bei der - abweichend von der Fig. 6 - der Loslagerring 10 über dem Innenbehälter 2 angeordnet ist und durch direkt oder indirekt am Außenbehälter 1 angreifenden Druckfedern 13 vorgespannt wird. Die Loslager-Befestigungselemente 11 greifen ringförmig verteilt einerseits am Loslagerring 10 und andererseits nahe dem Umfang an der Stirnwand 2b des Innenbehälters 2 an. Die Loslager-Befestigungselemente 11 stehen schräg auf die Längsachse L2 des Innenbehälters 2. Die Angriffspunkte 11a der Loslager-Befestigungselemente 11 am Innenbehälter 2 sind axial gesehen weiter vom Zentrum Z des Innenbehälters 2 entfernt als die Angriffspunkte 11b der Befestigungselemente 11 am Loslagerring 10.

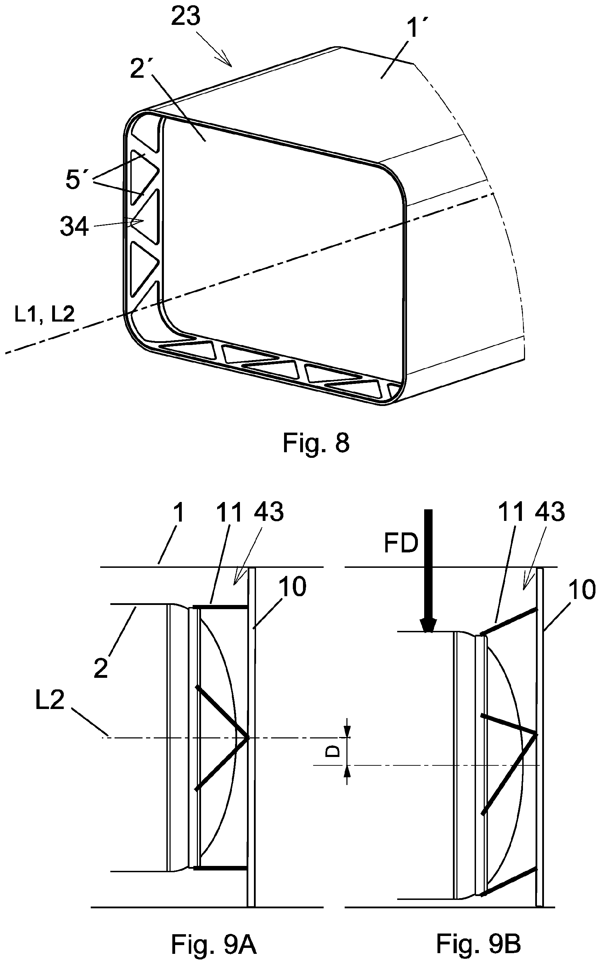

Fig. 8 zeigt eine Ausführungsform einer Behälteranordnung 23, bei der der Innenbehälter 2' als Quader mit gerundeten Kanten und der Außenbehälter 1' ebenfalls als Quader mit gerundeten Kanten ausgebildet ist. Der Außenbehälter 1' weist eine Längsachse L1 auf und der Innenbehälter 2' weist eine Längsachse L2 auf. Die beiden Behälter werden durch ein Festlager 34 miteinander steif verbunden, bei dem die steifen Festlager-Befestigungselemente 5' als Fachwerkselemente einer Rahmenkonstruktion ausgebildet sind, die schräg auf die Längsachse L2 des Innenbehälters 2' stehen und weder parallel zur noch normal auf die Längsachse L2 des Innenbehälters 2 stehen. Die Festlager-Befestigungselemente 5' sind jeweils paarweise an einer die Innenbehälter-Längsachse L2 enthaltenden Ebene gespiegelt und stehen windschief auf die Innenbehälter-Längsachse L2. Diese Rahmenkonstruktion lässt sich einfach aus faserverstärktem Kunststoff, z.B. durch Fräsen oder Stanzen einer Platte, herstellen. Es sei erwähnt, dass eine gleichartige Rahmenkonstruktion auch für das Loslager realisiert werden kann.

In Fig. 9A und Fig. 9B ist eine besonders vorteilhafte Ausführungsform eines Loslagers 43 dargestellt, bei der die Loslager-Befestigungselemente 11 in einem angenähert zylindrischen geometrischen Bauraum mit dem Innenbehälter 2 und dem Loslagerring 10 verbunden sind. Diese Ausführungsform bietet den großen Vorteil, dass bei dynamischer Belastung FD quer zur Längsachse L2 der Innenbehälter 2 zwar in Richtung der dynamischen Belastung ausgelenkt wird (Bezugszeichen D), die Auslenkung D aber durch den angenähert zylindrischen Bauraum praktisch zu keiner Schiefstellung des Loslagerrings 10 führt, wie in Fig. 9B zu sehen ist.

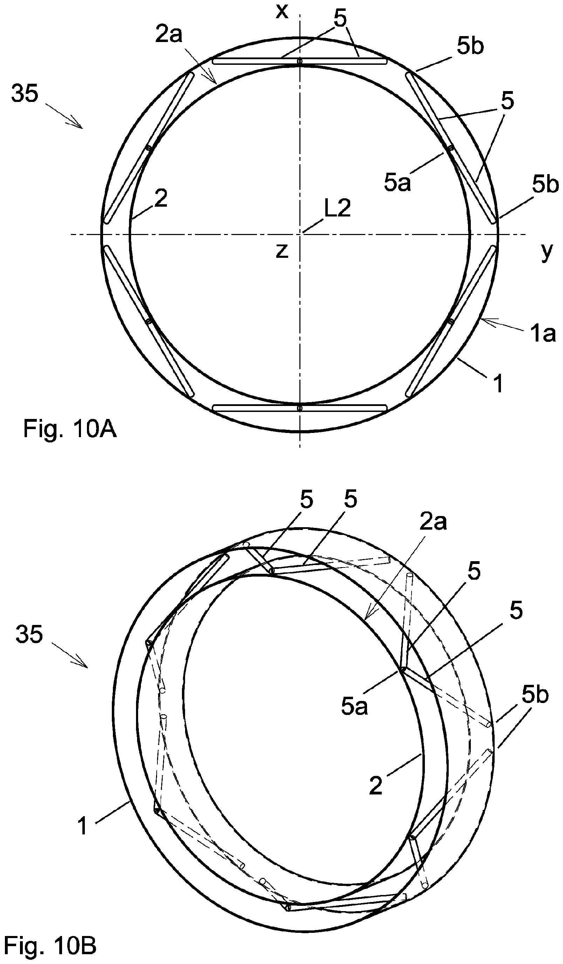

In den Figuren 10A und 10B ist ein der Fig. 1 entsprechendes Festlager 35 in Vorderansicht und in isometrischer Ansicht dargestellt. Die Angriffspunkte 5b der Festlager-Befestigungselemente 5 liegen ringförmig verteilt an einem Umfangskreis an der Innenwand 1a des Außenbehälters 1. Die Angriffspunkte 5a der Festlager-Befestigungselemente 5 liegen am Innenbehälter 2 an einem an der Außenwand 2a definierten Kreis. Die Festlager-Befestigungselemente 5 stehen schräg auf die das Zentrum Z enthaltende Längsachse L2 des Innenbehälters 2 und sind jeweils paarweise an einer die Innenbehälter-Längsachse L2 enthaltenden Ebene gespiegelt, siehe z.B. Ebene x. Diese Anordnung ist auch durch eine Fachwerkskonstruktion wie jene in Fig. 8 dargestellte realisierbar, indem die einzelnen Festlagerelemente 5 ersetzt werden durch die in eine Fachwerks-Rahmenkonstruktion integrierten Befestigungselemente 5' in Form von Fachwerkselementen. In diesem Sinne sind auch die schematischen Ausführungsformen der Figuren 1 bis 7 sowie Fig. 9A, 9B durch eine Fachwerkskonstruktion mit integrierten Befestigungselemente 5' in Form von Fachwerkselementen realisierbar.

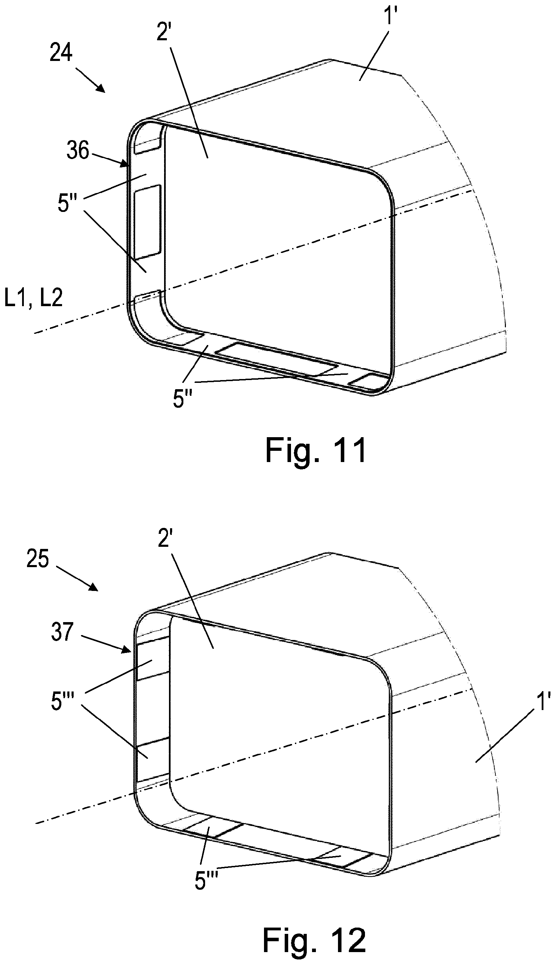

Fig. 11 zeigt eine der Fig. 8 ähnliche Ausführungsform einer Behälteranordnung 24, bei der der Innenbehälter 2' als Quader mit gerundeten Kanten und der Außenbehälter 1' ebenfalls als Quader mit gerundeten Kanten ausgebildet ist. Der Außenbehälter 1' umgibt den Innenbehälter 2' im Abstand und erstreckt sich über den Innenbehälter 2' hinaus. Der Außenbehälter 1' weist eine Längsachse L1 auf und der Innenbehälter 2' weist eine Längsachse L2 auf. Die beiden Längsachsen L1, L2 sind koaxial und erstrecken sich in der Hauptabmessung der Behälter 1', 2'. Die beiden Behälter sind durch ein Festlager 36 miteinander steif verbunden, bei dem die steifen Festlager-Befestigungselemente 5" als Platten einer Rahmenkonstruktion ausgebildet sind, die schräg, nämlich nicht normal auf die Längsachse L2 des Innenbehälters 2' stehen. Diese Rahmenkonstruktion lässt sich einfach aus faserverstärktem Kunststoff, z.B. durch Fräsen oder Stanzen und Biegen einer Platte, herstellen. Es sei erwähnt, dass eine gleichartige Rahmenkonstruktion auch für das Loslager realisiert werden kann.

Fig. 12 zeigt eine der Fig. 11 ähnliche Ausführungsform einer Behälteranordnung 25, bei der der Innenbehälter 2' als Quader mit gerundeten Kanten und der Außenbehälter 1' ebenfalls als Quader mit gerundeten Kanten ausgebildet ist. Der Außenbehälter 1' umgibt den Innenbehälter 2' im Abstand und erstreckt sich über den Innenbehälter 2' hinaus. Der Außenbehälter 1' weist eine Längsachse L1 auf und der Innenbehälter 2' weist eine Längsachse L2 auf. Die beiden Längsachsen L1, L2 sind koaxial und erstrecken sich in der Hauptabmessung der Behälter 1', 2'. Die beiden Behälter sind durch ein Festlager 37 miteinander steif verbunden, bei dem die steifen Festlager-Befestigungselemente 5''' als Platten ausgebildet sind, die schräg, nämlich nicht normal auf die Längsachse L2 des Innenbehälters 2' stehen. Es sei erwähnt, dass auch das Loslager mittels plattenförmiger Loslager-Befestigungselemente realisiert werden kann.

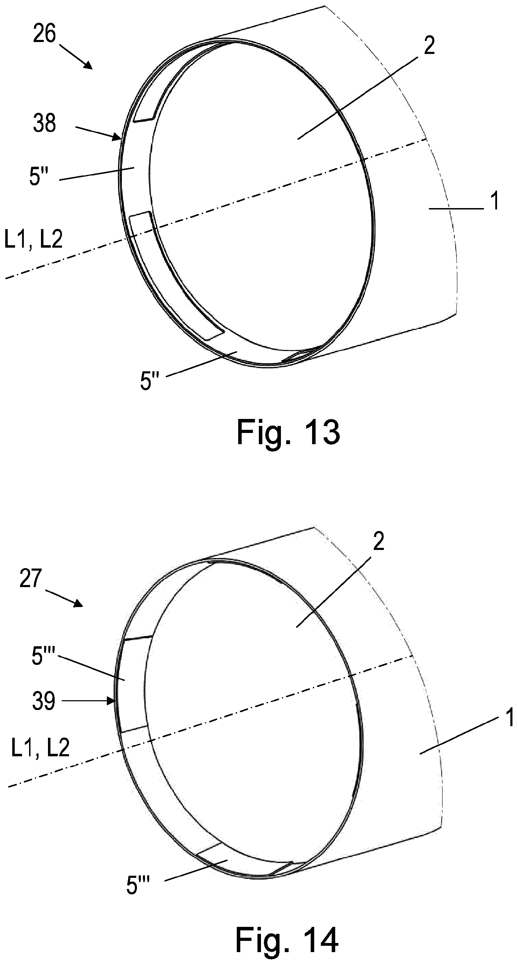

Fig. 13 zeigt eine Behälteranordnung 26, bei der der Innenbehälter 2 zylindrisch und der Außenbehälter 1 ebenfalls zylindrisch ausgebildet ist. Der Außenbehälter 1 umgibt den Innenbehälter 2 im Abstand und erstreckt sich über den Innenbehälter 2 hinaus. Der Außenbehälter 1 weist eine Längsachse L1 auf und der Innenbehälter 2 weist eine Längsachse L2 auf, die koaxial sind und sich in der Hauptabmessung der Behälter 1, 2 erstrecken. Die beiden Behälter 1,2 sind durch ein Festlager 38 miteinander steif verbunden, wobei die steifen Festlager-Befestigungselemente 5" als Platten einer Rahmenkonstruktion ausgebildet sind, die schräg, nämlich nicht normal auf die Längsachse L2 des Innenbehälters 2 stehen. Diese Rahmenkonstruktion lässt sich einfach aus faserverstärktem Kunststoff, z.B. durch Fräsen oder Stanzen und Biegen einer Platte, herstellen. Eine gleichartige Rahmenkonstruktion kann auch für das Loslager realisiert werden. Die Festlager-Befestigungselemente 5" sind radial im Bauraum zwischen dem Außenbehälter 1 und dem Innenbehälter 2 angeordnet und gleichmäßig über den Umfang verteiltDie radiale Anordnung der Festlager-Befestigungselemente 5" weist prinzipiell eine geringere Steifigkeit gegen Verdrehung des Außenbehälters 1 zum Innenbehälter 2 auf, was jedoch durch die Plattenform der Festlager-Befestigungselemente 5" wieder ausgeglichen wird.

Fig. 14 zeigt eine der Fig. 13 ähnliche Ausführungsform einer Behälteranordnung 27, die sich im Wesentlichen nur dadurch unterscheidet, dass die steifen Festlager-Befestigungselemente 5''' des Festlagers 39 als Platten ausgebildet sind, die ohne Rahmenkonstruktion direkt mit dem Außenbehälter 1 und dem Innenbehälter 2 verbunden sind.

In den Ausführungsformen der Figuren 11 bis 14 sind die plattenförmigen Festlager-Befestigungselemente 5", 5''' so angeordnet, dass sie wesentliche Schubkräfte aufnehmen können. Wirkt beispielweise eine vertikale Kraft auf den Innenbehälter 1, 1', so übernehmen die im Wesentlichen vertikal ausgerichteten, in der Zeichnung links und rechts angeordneten Festlager-Befestigungselemente die Hauptlast und übertragen dabei Schubkräfte. Die im Wesentlichen waagrecht angeordneten Festlager-Befestigungselemente würden geringfügig auf Biegung beansprucht, übertragen aber keine besonders großen Kräfte.

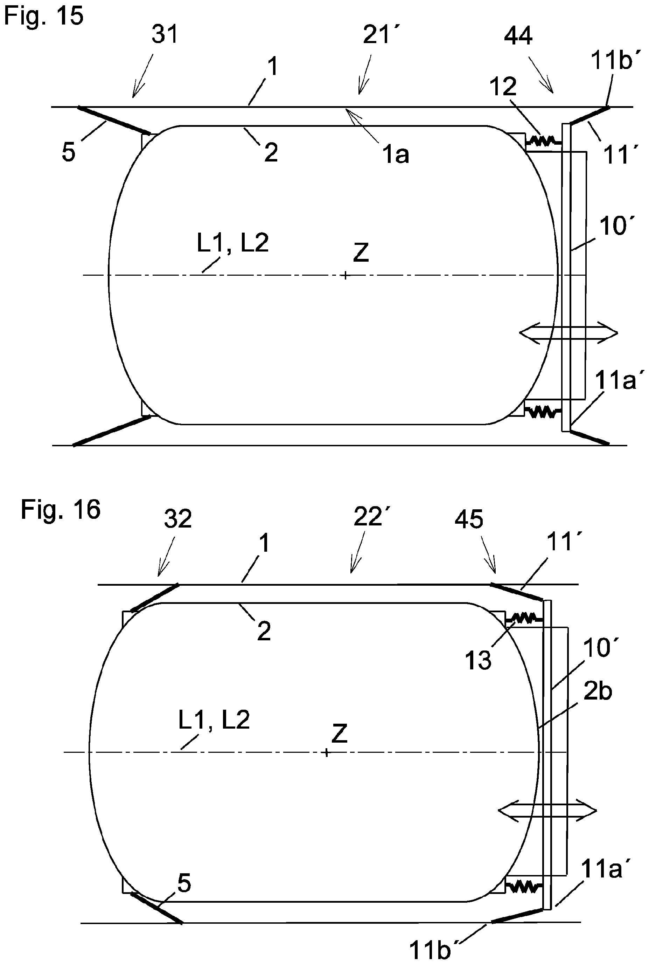

Fig. 15 zeigt eine der Fig. 6 ähnliche Behälteranordnung 21' mit dem Außenbehälter 1 mit einer Längsachse L1 und dem im Außenbehälter 1 thermisch isoliert angeordneten Innenbehälter 2 mit einer Längsachse L2. Die beiden Behälter 1, 2 sind koaxial zueinander angeordnet und durch eine Aufhängevorrichtung miteinander verbunden, die das oben beschriebene Festlager 31 und zusätzlich ein Loslager 44 umfasst. Das Loslager 44 besitzt einen Loslagerring 10' aus einem steifen Material, wie z.B. faserverstärktem Kunststoff oder Metall bzw. einer Metalllegierung. Auf Zug und Druck beanspruchbare Loslager-Befestigungselemente 11' greifen ringförmig verteilt einerseits mit Angriffspunkten 11a' am Loslagerring 10' und andererseits mittels Angriffspunkten 11b' am Außenbehälter 1 an und halten somit den Loslagerring 10' in einer definierten Lage. Der Innenbehälter 2 ist im Loslagerring 10' verschiebbar angeordnet (durch einen Doppelpfeil symbolisiert), wobei in dieser Ausführungsform ein zylindrischer Fortsatz des Innenbehälters 2 im Loslagerring 10' verschiebbar gelagert ist. Der Innenbehälter 2 ist durch am Innenbehälter 2 und am Loslagerring 10' angreifende Zugfedern 12 vorgespannt. Die Loslager-Befestigungselemente 11' sind aus einem möglichst steifen Material gefertigt. Sehr gut eignen sich Faserverbundwerkstoffe, vorzugsweise mit Aramidfasern, Kohlefasern, Glasfasern, Basaltfasern oder Kombinationen daraus, besonders bevorzugt mit Aramidfasern, die abschnittsweise mit Glasfasern gemischt sind. Die Angriffspunkte 11b' der Loslager-Befestigungselemente 11' am Außenbehälter 1 sind vom Zentrum Z des Innenbehälters 2 axial weiter entfernt als die Angriffspunkte 11a' der Loslager-Befestigungselemente 11' am Loslagerring 10'.

Fig. 16 zeigt eine weitere Ausführungsform einer erfindungsgemäßen Behälteranordnung 22', die der Ausführungsform von Fig. 12 ähnlich ist, sich aber davon durch eine Bauform des Festlagers 32 wie oben anhand der Fig. 7 beschrieben und eine Variante des Loslagers 45 unterscheidet. Das Loslager 45 besitzt einen Loslagerring 10' aus einem steifen Material, wie z.B. faserverstärktem Kunststoff oder Metall bzw. einer Metalllegierung. Auf Zug und Druck beanspruchbare Loslager-Befestigungselemente 11' greifen ringförmig verteilt einerseits mit Angriffspunkten 11a' am Loslagerring 10' und andererseits mittels Angriffspunkten 11b' am Außenbehälter 1 an und halten somit den Loslagerring 10' in einer definierten Lage. Der Innenbehälter 2 ist mit einem Fortsatz im Loslagerring 10' verschiebbar angeordnet (durch einen Doppelpfeil symbolisiert). Der Innenbehälter 2 ist durch am Innenbehälter 2 und am Loslagerring 10' angreifende Druckfedern 13 vorgespannt. Die Angriffspunkte 11a' der Loslager-Befestigungselemente 11' am Loslagerring 10' sind vom Zentrum Z des Innenbehälters 2 axial weiter entfernt als die Angriffspunkte 11b' der Loslager-Befestigungselemente 11' am Außenbehälter 1.

Faserverbundteile sind in der Regel auf Zug höher belastbar als auf Druck. Die Zugfedern 12 und Druckfedern 13 dienen dazu, diese unterschiedlichen Belastbarkeiten bei Zug und Druck zu berücksichtigen.

Es sei erwähnt, dass die Ausführungsformen der Festlager und Loslager gemäß Fig. 15 und Fig. 16 auch mit Festlager-Befestigungselementen und Loslager-Befestigungselementen realisiert werden kann, die als Fachwerkselemente einer Rahmenkonstruktion oder als Platten oder als Platten einer Rahmenkonstruktion ausgebildet sind.

## Patentansprüche

1. Behälteranordnung (20, 21, 21', 22, 22', 23, 24, 25, 26, 27) eines Außenbehälters (1, 1') und eines im Außenbehälter thermisch isoliert angeordneten Innenbehälters (2, 2'), wobei zwischen dem Innenbehälter (2, 2') und dem Außenbehälter (1, 1') ein ringförmiger Bauraum (7) definiert ist, wobei ein einzelnes in allen Richtungen im Raum wirkende Kräfte übertragendes Festlager (30, 31, 32, 33, 34, 35, 36, 37, 38, 39), das einerseits am Außenbehälter (1, 1') und andererseits am Innenbehälter (2, 2') angreifende, auf Zug und Druck beanspruchbare Festlager-Befestigungselemente (5, 5', 5", 5''') umfasst, wobei die Festlager-Befestigungselemente (5, 5', 5", 5''') in dem Bauraum (7) verteilt angeordnet, vorzugsweise im Bereich des Umfangs des Innenbehälters verteilt, am Innenbehälter (2, 2') angreifen und wobei die Festlager-Befestigungselemente (5, 5', 5", 5''') in dem ringförmigen Bauraum (7) verteilt, vorzugsweise im Bereich des Umfangs des Außenbehälters (1, 1') verteilt, am Außenbehälter (1, 1') angreifen, wobei die Festlager-Befestigungselemente (5, 5', 5", 5''') schräg auf die Längsachse (L2) des Innenbehälters (2, 2') stehen und insbesondere nicht normal auf die Längsachse (L2) des Innenbehälters (2) stehen, **dadurch gekennzeichnet, dass** die Festlager-Befestigungselemente (5, 5', 5", 5''') als Fachwerkselemente einer Rahmenkonstruktion oder als Platten oder als Platten einer Rahmenkonstruktion ausgebildet sind.

2. Behälteranordnung (20, 21, 21', 22, 22', 23, 24, 25, 26, 27) nach Anspruch 1, **dadurch gekennzeichnet, dass** die Angriffspunkte (5a) der Festlager-Befestigungselemente (5, 5', 5", 5''') am Innenbehälter (2, 2') radial (r1) näher zum Umfang (RI) des Innenbehälters als zur Längsachse (L2) des Innenbehälters (2, 2') liegen und dass die Angriffspunkte (5b) der Festlager-Befestigungselemente (5, 5', 5", 5''') am Außenbehälter (1, 1') radial (r2) näher zum Umfang (RA) des Außenbehälters (1, 1') als zur Längsachse (L1) des Außenbehälters (1, 1') liegen.

3. Behälteranordnung (20, 21, 21', 22, 22', 23, 24, 25, 26, 27) nach Anspruch 1 oder 2, **dadurch gekennzeichnet, dass** die Festlager-Befestigungselemente (5, 5', 5", 5''') jeweils paarweise an einer die Innenbehälter-Längsachse (L2) enthaltenden Ebene (x) gespiegelt sind.

4. Behälteranordnung (20, 21, 21', 22, 22', 23, 24, 25, 26, 27) nach einem der vorhergehenden Ansprüche, **dadurch gekennzeichnet, dass** die Angriffspunkte (5a) der Festlager-Befestigungselemente (5, 5', 5", 5''') am Innenbehälter (2) in einer Normalebene zur Längsachse (L2) des Innenbehälters (2) liegen.

5. Behälteranordnung (20, 21, 21', 22, 22', 23, 24, 25, 26, 27) nach einem der vorhergehenden Ansprüche, **dadurch gekennzeichnet, dass** die Angriffspunkte (5b) der Festlager-Befestigungselemente (5, 5', 5", 5''') am Außenbehälter (1) in einer Normalebene zur Längsachse (L1) des Außenbehälters (1) liegen.

6. Behälteranordnung (20, 21, 21', 22, 22', 23, 24, 25, 26, 27) nach einem der vorhergehenden Ansprüche, **dadurch gekennzeichnet, dass** die Angriffspunkte (5a) der Festlager-Befestigungselemente (5, 5', 5", 5''') am Innenbehälter (2, 2') vom Zentrum (Z) des Innenbehälters axial weiter entfernt sind als die Angriffspunkte (5b) der Festlager-Befestigungselemente (5, 5', 5", 5''') am Außenbehälter (1, 1').

7. Behälteranordnung (20, 21, 21', 22, 22', 23, 24, 25, 26, 27) nach einem der Ansprüche 1 bis 5, **dadurch gekennzeichnet, dass** die Angriffspunkte (5a) der Festlager-Befestigungselemente (5, 5', 5", 5''') am Innenbehälter (2, 2') axial näher am Zentrum (Z) des Innenbehälters liegen als die Angriffspunkte (5b) der Festlager-Befestigungselemente (5, 5', 5", 5''') am Außenbehälter (1, 1').

8. Behälteranordnung (20, 21, 21', 22, 22', 23, 24, 25, 26, 27) nach einem der vorhergehenden Ansprüche, **dadurch gekennzeichnet, dass** die Festlager-Befestigungselemente (5, 5', 5", 5'''), insbesondere plattenförmige Festlager-Befestigungselemente Schubkräfte aufnehmend angeordnet sind.

9. Behälteranordnung (20, 21, 21', 22, 22', 23, 24, 25, 26, 27) nach einem der vorhergehenden Ansprüche, **dadurch gekennzeichnet, dass** die Festlager-Befestigungselemente (5, 5', 5", 5'''), insbesondere als Fachwerkselemente einer Rahmenkonstruktion ausgebildete Festlager-Befestigungselemente, die Längsachse (L2) des Innenbehälters (2) nicht schneiden.

10. Behälteranordnung (20, 21, 21', 22, 22', 23, 24, 25, 26, 27) nach einem der vorhergehenden Ansprüche, **gekennzeichnet durch** ein im Außenbehälter (1, 1') angeordnetes, den Innenbehälter (2, 2') stützendes Loslager (41, 42, 43, 44, 45), das mit einem Loslagerring (10, 10') ausgebildet ist, wobei auf Zug und Druck beanspruchbare Loslager-Befestigungselemente (11, 11') verteilt einerseits am Loslagerring (10, 10') und andererseits am Innenbehälter (2, 2') oder am Außenbehälter (1, 1') angreifen, wobei die Loslager-Befestigungselemente (11, 11') in einem ringförmigen Bauraum angeordnet sind, vorzugsweise im Bereich des Umfangs des Innenbehälters (2, 2'), wobei der Loslagerring (10, 10') mittels Zugfedern (12) oder Druckfedern (13) vorgespannt ist.

11. Behälteranordnung (20, 21, 21', 22, 22', 23, 24, 25, 26, 27) nach Anspruch 10, **dadurch gekennzeichnet, dass** die Loslager-Befestigungselemente (11) schräg auf die Längsachse (L2) des Innenbehälters (2, 2') stehen und insbesondere nicht normal auf die Längsachse (L2) des Innenbehälters (2, 2') stehen, wobei vorzugsweise die Loslager-Befestigungselemente (11) jeweils paarweise an einer die Innenbehälter-Längsachse (L2) enthaltenden Ebene gespiegelt sind.

12. Behälteranordnung (20, 21, 21', 22, 22', 23, 24, 25, 26, 27) nach Anspruch 11, **dadurch gekennzeichnet, dass** die Loslager-Befestigungselemente (11) insbesondere als Fachwerkselemente einer Rahmenkonstruktion ausgebildete Loslager-Befestigungselemente, die Längsachse (L2) des Innenbehälters (2) nicht schneiden.

13. Behälteranordnung (20, 21, 21', 22, 22', 23, 24, 25, 26, 27) nach einem der Ansprüche 10 bis 12, **dadurch gekennzeichnet, dass** die Angriffspunkte (11a) der Loslager-Befestigungselemente (11) am Innenbehälter (2, 2') vom Zentrum (Z) des Innenbehälters axial weiter entfernt sind als die Angriffspunkte (11b) der Loslager-Befestigungselemente (11) am Loslagerring (10).

14. Behälteranordnung (20, 21, 21', 22, 22', 23, 24, 25, 26, 27) nach einem der Ansprüche 10 bis 12, **dadurch gekennzeichnet, dass** die Angriffspunkte (11a) der Loslager-Befestigungselemente (11) am Innenbehälter (2, 2') näher am Zentrum (Z) des Innenbehälters (2, 2') liegen als die Angriffspunkte (11b) der Befestigungselemente (11) am Loslagerring (10).

15. Behälteranordnung (20, 21, 21', 22, 22', 23, 24, 25, 26, 27) nach einem der Ansprüche 10 bis 12, **dadurch gekennzeichnet, dass** die Angriffspunkte (11b') der Loslager-Befestigungselemente (11) am Außenbehälter (1, 1') vom Zentrum (Z) des Innenbehälters (2, 2') axial weiter entfernt sind als die Angriffspunkte (11a') der Loslager-Befestigungselemente (11') am Loslagerring (10').

16. Behälteranordnung (20, 21, 21', 22, 22', 23, 24, 25, 26, 27) nach einem der Ansprüche 10 bis 12, **dadurch gekennzeichnet, dass** die Angriffspunkte (11b') der Loslager-Befestigungselemente (11) am Außenbehälter (1, 1') näher am Zentrum (Z) des Innenbehälters (2, 2') liegen als die Angriffspunkte (11a') der Befestigungselemente (11') am Loslagerring (10').

17. Behälteranordnung (20, 21, 21', 22, 22', 23, 24, 25, 26, 27) nach einem der vorhergehenden Ansprüche, **dadurch gekennzeichnet, dass** die Festlager-Befestigungselemente (5, 5', 5", 5''') und gegebenenfalls die Loslager-Befestigungselemente (11, 11') aus Faserverbundwerkstoffen, vorzugsweise mit Aramidfasern, Kohlefasern, Glasfasern, Basaltfasern oder Kombinationen daraus, besonders bevorzugt mit Aramidfasern, die abschnittsweise mit Glasfasern gemischt sind, ausgebildet sind.

18. Behälteranordnung (20, 21, 21', 22, 22', 23, 24, 25, 26, 27) nach einem der vorhergehenden Ansprüche, **dadurch gekennzeichnet, dass** die Loslager-Befestigungselemente als Fachwerkselemente einer Rahmenkonstruktion oder als Platten oder als Platten einer Rahmenkonstruktion ausgebildet sind und vorzugsweise Schubkräfte aufnehmend angeordnet sind.

19. Behälteranordnung (20, 21, 21', 22, 22', 23, 24, 25, 26, 27) nach einem der vorhergehenden Ansprüche, **dadurch gekennzeichnet, dass** der Außenbehälter und der Innenbehälter mit koaxialen Behälterlängsachsen (L1, L2) angeordnet sind.

20. Behälteranordnung nach einem der vorherigen Ansprüche, **dadurch gekennzeichnet, dass** zwischen Außenbehälter (1, 1') und Innenbehälter (2, 2') zumindest ein Strahlungsschild (4) angeordnet ist, wobei vorzugsweise zumindest ein Strahlungsschild direkt an Befestigungselementen (5, 5',5", 5''', 11, 11') der Aufhängevorrichtung montiert ist.

21. Behälteranordnung nach einem der vorherigen Ansprüche, **dadurch gekennzeichnet, dass** an zumindest einem Strahlungsschild (4) zumindest ein weiteres Strahlungsschild montiert ist.

## Claims

1. A container arrangement (20, 21, 21', 22, 22', 23, 24, 25, 26, 27) of an outer container (1, 1') and an inner container (2, 2') mounted for thermal insulation in the outer container, wherein an annular installation space (7) is defined between the inner container (2, 2') and the outer container (1, 1'), wherein there is a single fixed bearing (30, 31, 32, 33, 34, 35, 36, 37, 38, 39) transmitting forces acting in all spatial directions, which comprises fixed bearing securing elements (5, 5', 5", 5''') which engage, on the one hand, the outer container (1, 1') and, on the other hand, the inner container (2, 2') and which can be stressed in tension and in compression, the fixed bearing securing elements (5, 5', 5", 5''') engaging the inner container (2, 2') while being arranged so as to be distributed in the installation space (7), preferably distributed in the area of the circumference of the inner container, and the fixed bearing securing elements (5, 5', 5", 5''') engaging the outer container (1, 1') while being distributed in the annular installation space (7), preferably in the area of the circumference of the outer container (1, 1'), wherein the fixed bearing securing elements (5, 5', 5", 5''') are oblique to the longitudinal axis (L2) of the inner container (2, 2') and, in particular, are not normal to the longitudinal axis (L2) of the inner container (2), **characterized in that** the fixed bearing securing elements (5, 5', 5", 5''') are designed as framework elements of a frame structure or as plates or as plates of a frame structure.

2. A container arrangement (20, 21, 21', 22, 22', 23, 24, 25, 26, 27) according to claim 1, **characterized in that** the contact points (5a) of the fixed bearing securing elements (5, 5', 5", 5''') at the inner container (2, 2') are located radially (r1) closer to the circumference (RI) of the inner container than to the longitudinal axis (L2) of the inner container (2, 2') and that the contact points (5b) of the fixed bearing securing elements (5, 5', 5", 5''') at the outer container (1, 1') are located radially (r2) closer to the circumference (RA) of the outer container (1, 1') than to the longitudinal axis (L1) of the outer container (1, 1').

3. A container arrangement (20, 21, 21', 22, 22', 23, 24, 25, 26, 27) according to claim 1 or 2, **characterized in that** the fixed bearing securing elements (5, 5', 5", 5''') are mirrored, always in pairs, at a plane (x) including the longitudinal axis (L2) of the inner container.

4. A container arrangement (20, 21, 21', 22, 22', 23, 24, 25, 26, 27) according to any of the preceding claims, **characterized in that** the contact points (5a) of the fixed bearing securing elements (5, 5', 5", 5''') at the inner container (2) are located on a normal plane relative to the longitudinal axis (L2) of the inner container (2).

5. A container arrangement (20, 21, 21', 22, 22', 23, 24, 25, 26, 27) according to any of the preceding claims, **characterized in that** the contact points (5b) of the fixed bearing securing elements (5, 5', 5", 5''') at the outer container (1) are located on a normal plane relative to the longitudinal axis (L1) of the outer container (1).

6. A container arrangement (20, 21, 21', 22, 22', 23, 24, 25, 26, 27) according to any of the preceding claims, **characterized in that** the contact points (5a) of the fixed bearing securing elements (5, 5', 5", 5''') at the inner container (2, 2') are axially further away from the centre (Z) of the inner container than the contact points (5b) of the fixed bearing securing elements (5, 5', 5", 5''') at the outer container (1, 1').

7. A container arrangement (20, 21, 21', 22, 22', 23, 24, 25, 26, 27) according to any of claims 1 to 5, **characterized in that** the contact points (5a) of the fixed bearing securing elements (5, 5', 5", 5''') at the inner container (2, 2') are axially closer to the centre (Z) of the inner container than the contact points (5b) of the fixed bearing securing elements (5, 5', 5", 5''') at the outer container (1, 1').

8. A container arrangement (20, 21, 21', 22, 22', 23, 24, 25, 26, 27) according to any of the preceding claims, **characterized in that** the fixed bearing securing elements (5, 5', 5", 5'''), in particular plate-shaped fixed bearing securing elements, are arranged for absorbing shearing forces.

9. A container arrangement (20, 21, 21', 22, 22', 23, 24, 25, 26, 27) according to any of the preceding claims, **characterized in that** the fixed bearing securing elements (5, 5', 5", 5'''), in particular fixed bearing securing elements designed as framework elements of a frame structure, do not intersect the longitudinal axis (L2) of the inner container (2).

10. A container arrangement (20, 21, 21', 22, 22', 23, 24, 25, 26, 27) according to any of the preceding claims, **characterized by** a floating bearing (41, 42, 43, 44, 45) arranged in the outer container (1, 1') and supporting the inner container (2, 2') and designed with a floating bearing ring (10, 10'), with distributed floating bearing securing elements, (11, 11'), which can be stressed in tension and in compression, engaging, on the one hand, the floating bearing ring (10, 10') and, on the other hand, the inner container (2, 2') or the outer container (1, 1'), wherein the floating bearing securing elements (11, 11') are arranged in an annular installation space, preferably in the area of the circumference of the inner container (2,2'), the floating bearing ring (10, 10') being prestressed by means of tension springs (12) or compression springs (13).

11. A container arrangement (20, 21, 21', 22, 22', 23, 24, 25, 26, 27) according to claim 10, **characterized in that** the floating bearing securing elements (11) are oblique to the longitudinal axis (L2) of the inner container (2, 2') and, in particular, are not normal to the longitudinal axis (L2) of the inner container (2,2'), the floating bearing securing elements (11) preferably being mirrored, always in pairs, at a plane including the longitudinal axis (L2) of the inner container.

12. A container arrangement (20, 21, 21', 22, 22', 23, 24, 25, 26, 27) according to claim 11, **characterized in that** the floating bearing securing elements (11), in particular floating bearing securing elements designed as framework elements of a frame structure, do not intersect the longitudinal axis (L2) of the inner container (2).

13. A container arrangement (20, 21, 21', 22, 22', 23, 24, 25, 26, 27) according to any of claims 10 to 12, **characterized in that** the contact points (11a) of the floating bearing securing elements (11) at the inner container (2, 2') are axially further away from the centre (Z) of the inner container than the contact points (11b) of the floating bearing securing elements (11) at the floating bearing ring (10).

14. A container arrangement (20, 21, 21', 22, 22', 23, 24, 25, 26, 27) according to any of claims 10 to 12, **characterized in that** the contact points (11a) of the floating bearing securing elements (11) at the inner container (2, 2') are closer to the centre (Z) of the inner container (2, 2') than the contact points (11b) of the securing elements (11) at the floating bearing ring (10).

15. A container arrangement (20, 21, 21', 22, 22', 23, 24, 25, 26, 27) according to any of claims 10 to 12, **characterized in that** the contact points (11b') of the floating bearing securing elements (11) at the outer container (1, 1') are axially further away from the centre (Z) of the inner container (2, 2') than the contact points (11a') of the floating bearing securing elements (11') at the floating bearing ring (10').

16. A container arrangement (20, 21, 21', 22, 22', 23, 24, 25, 26, 27) according to any of claims 10 to 12, **characterized in that** the contact points (11b') of the floating bearing securing elements (11) at the outer container (1, 1') are closer to the centre (Z) of the inner container (2, 2') than the contact points (11a') of the securing elements (11') at the floating bearing ring (10').

17. A container arrangement (20, 21, 21', 22, 22', 23, 24, 25, 26, 27) according to any of the preceding claims, **characterized in that** the fixed bearing securing elements (5, 5', 5", 5''') and, optionally, the floating bearing securing elements (11, 11') are formed from fibre-reinforced materials, preferably comprising aramide fibres, carbon fibres, glass fibres, basalt fibres or combinations thereof, particularly preferably comprising aramide fibres which, in sections, are mixed with glass fibres.

18. A container arrangement (20, 21, 21', 22, 22', 23, 24, 25, 26, 27) according to any of the preceding claims, **characterized in that** the floating bearing securing elements are designed as framework elements of a frame structure or as plates or as plates of a frame structure and preferably are arranged for absorbing shearing forces.

19. A container arrangement (20, 21, 21', 22, 22', 23, 24, 25, 26, 27) according to any of the preceding claims, **characterized in that** the outer container and the inner container are arranged with coaxial longitudinal container axes (L1, L2).

20. A container arrangement according to any of the preceding claims, **characterized in that** at least one radiation shield (4) is arranged between the outer container (1, 1') and the inner container (2,2'), with at least one radiation shield preferably being mounted directly to securing elements (5, 5', 5", 5''', 11, 11') of the suspension device.

21. A container arrangement according to any of the preceding claims, **characterized in that** at least one further radiation shield is mounted to at least one radiation shield (4).

## Revendications

1. Agencement de récipients (20, 21, 21', 22, 22', 23, 24, 25, 26, 27) d'un récipient extérieur (1, 1') et d'un récipient intérieur (2, 2') isolé thermiquement disposé dans un récipient extérieur, dans lequel une chambre de construction annulaire (7) est définie entre le récipient intérieur (2, 2') et le récipient extérieur (1, 1'), dans lequel un unique support fixe (30, 31, 32, 33, 34, 35, 36, 37, 38, 39) qui transmet des forces qui agissent dans toutes les directions dans l'espace, comprend des éléments de fixation de support fixe (5, 5', 5", 5''') attachés, d'une part, au récipient extérieur (1, 1') et, d'autre part, au récipient intérieur (2, 2') et pouvant être sollicités en traction et en compression, dans lequel les éléments de fixation de support fixe (5, 5', 5", 5''') disposés de façon répartie dans la chambre de construction (7), de préférence répartis dans la région de la périphérie du récipient intérieur, sont attachés au récipient intérieur (2, 2') et dans lequel les éléments de fixation de support fixe (5, 5', 5", 5''') répartis dans la chambre de construction annulaire (7), de préférence répartis dans la région de la périphérie du récipient extérieur (1, 1'), sont attachés au récipient extérieur (1, 1'), dans lequel les éléments de fixation de support fixe (5, 5', 5", 5''') sont obliques par rapport à l'axe longitudinal (L2) du récipient intérieur (2, 2') et en particulier, ne sont pas perpendiculaires à l'axe longitudinal (L2) du récipient intérieur (2), **caractérisé en ce que** les éléments de fixation de support fixe (5, 5', 5", 5"') sont réalisés sous la forme d'éléments de treillis d'une construction de cadre ou sous forme de plaques ou sous forme de plaques d'une construction de cadre.

2. Agencement de récipients (20, 21, 21', 22, 22', 23, 24, 25, 26, 27) selon la revendication 1, **caractérisé en ce que** les points d'attache (5a) des éléments de fixation de support fixe (5, 5', 5", 5"') au récipient intérieur (2, 2') sont situés radialement (r1) plus près de la périphérie (RI) du récipient intérieur que de l'axe longitudinal (L2) du récipient intérieur (2, 2') et **en ce que** les points d'attache (5b) des éléments de fixation de support fixe (5, 5', 5", 5''') au récipient extérieur (1, 1') sont situés radialement (r2) plus près de la périphérie (RA) du récipient extérieur (1, 1') que de l'axe longitudinal (L1) du récipient extérieur (1, 1').

3. Agencement de récipients (20, 21, 21', 22, 22', 23, 24, 25, 26, 27) selon une revendication 1 ou 2, **caractérisé en ce que** les éléments de fixation de support fixe (5, 5', 5", 5"') sont chaque fois disposés symétriquement par paires sur un plan (x) contenant l'axe longitudinal (L2) du récipient intérieur.

4. Agencement de récipients (20, 21, 21', 22, 22', 23, 24, 25, 26, 27) selon l'une quelconque des revendications précédentes, **caractérisé en ce que** les points d'attache (5a) des éléments de fixation de support fixe (5, 5', 5", 5"') au récipient intérieur (2) sont situés dans un plan normal à l'axe longitudinal (L2) du récipient intérieur (2).

5. Agencement de récipients (20, 21, 21', 22, 22', 23, 24, 25, 26, 27) selon l'une quelconque des revendications précédentes, **caractérisé en ce que** les points d'attache (5b) des éléments de fixation de support fixe (5, 5', 5", 5"') au récipient extérieur (1) sont situés dans un plan normal à l'axe longitudinal (L1) du récipient extérieur (1).

6. Agencement de récipients (20, 21, 21', 22, 22', 23, 24, 25, 26, 27) selon l'une quelconque des revendications précédentes, **caractérisé en ce que** les points d'attache (5a) des éléments de fixation de support fixe (5, 5', 5", 5"') au récipient intérieur (2, 2') sont axialement plus éloignés du centre (Z) du récipient intérieur que les points d'attache (5b) des éléments de fixation de support fixe (5, 5', 5", 5"') au récipient extérieur (1, 1').

7. Agencement de récipients (20, 21, 21', 22, 22', 23, 24, 25, 26, 27) selon l'une quelconque des revendications 1 à 5, **caractérisé en ce que** les points d'attache (5a) des éléments de fixation de support fixe (5, 5', 5", 5"') au récipient intérieur (2, 2') sont situés axialement plus près du centre (Z) du récipient intérieur que les points d'attache (5b) des éléments de fixation de support fixe (5, 5', 5", 5"') au récipient extérieur (1, 1').

8. Agencement de récipients (20, 21, 21', 22, 22', 23, 24, 25, 26, 27) selon l'une quelconque des revendications précédentes, **caractérisé en ce que** les éléments de fixation de support fixe (5, 5', 5", 5"'), en particulier des éléments de fixation de support fixe en forme de plaques, sont disposés de façon à reprendre des efforts de cisaillement.

9. Agencement de récipients (20, 21, 21', 22, 22', 23, 24, 25, 26, 27) selon l'une quelconque des revendications précédentes, **caractérisé en ce que** les éléments de fixation de support fixe (5, 5', 5", 5"'), en particulier des éléments de fixation de support fixe réalisés sous la forme d'éléments de treillis d'une construction de cadre, ne coupent pas l'axe longitudinal (L2) du récipient intérieur (2).

10. Agencement de récipients (20, 21, 21', 22, 22', 23, 24, 25, 26, 27) selon l'une quelconque des revendications précédentes, **caractérisé par** un support libre (41, 42, 43, 44, 45) disposé dans le récipient extérieur (1, 1') et supportant le récipient intérieur (2, 2'), qui est réalisé avec un anneau de support libre (10, 10'), dans lequel des éléments de fixation de support libre (11, 11') pouvant être sollicités en traction et en compression sont attachés de façon répartie, d'une part, à l'anneau de support libre (10, 10') et, d'autre part, au récipient intérieur (2, 2') ou au récipient extérieur (1, 1'), dans lequel les éléments de fixation de support libre (11, 11') sont disposés dans une chambre de construction annulaire, de préférence dans la région de la périphérie du récipient intérieur (2,2'), dans lequel l'anneau de support libre (10, 10') est précontraint par des ressorts de traction (12) ou des ressorts de compression (13).

11. Agencement de récipients (20, 21, 21', 22, 22', 23, 24, 25, 26, 27) selon la revendication 10, **caractérisé en ce que** les éléments de fixation de support libre (11) sont obliques à l'axe longitudinal (L2) du récipient intérieur (2, 2') et, en particulier, ne sont pas perpendiculaires à l'axe longitudinal (L2) du récipient intérieur (2, 2'), dans lequel les éléments de fixation de support libre (11) sont de préférence chaque fois disposés symétriquement par paires sur un plan contenant l'axe longitudinal (L2) du récipient intérieur.

12. Agencement de récipients (20, 21, 21', 22, 22', 23, 24, 25, 26, 27) selon la revendication 11, **caractérisé en ce que** les éléments de fixation de support libre (11), en particulier des éléments de fixation de support libre réalisés sous la forme d'éléments de treillis d'une construction de cadre, ne coupent pas l'axe longitudinal (L2) du récipient intérieur (2).

13. Agencement de récipients (20, 21, 21', 22, 22', 23, 24, 25, 26, 27) selon l'une quelconque des revendications 10 à 12, **caractérisé en ce que** les points d'attache (11a) des éléments de fixation de support libre (11) au récipient intérieur (2, 2') sont axialement plus éloignés du centre (Z) du récipient intérieur que les points d'attache (11b) des éléments de fixation de support libre (11) à l'anneau de support libre (10).

14. Agencement de récipients (20, 21, 21', 22, 22', 23, 24, 25, 26, 27) selon l'une quelconque des revendications 10 à 12, **caractérisé en ce que** les points d'attache (11a) des éléments de fixation de support libre (11) au récipient intérieur (2, 2') sont situés plus près du centre (Z) du récipient intérieur (2, 2') que les points d'attache (11b) des éléments de fixation (11) à l'anneau de support libre (10).

15. Agencement de récipients (20, 21, 21', 22, 22', 23, 24, 25, 26, 27) selon l'une quelconque des revendications 10 à 12, **caractérisé en ce que** les points d'attache (11b') des éléments de fixation de support libre (11) au récipient extérieur (1, 1') sont axialement plus éloignés du centre (Z) du récipient intérieur (2, 2') que les points d'attache (11a') des éléments de fixation de support libre (11') à l'anneau de support libre (10').

16. Agencement de récipients (20, 21, 21', 22, 22', 23, 24, 25, 26, 27) selon l'une quelconque des revendications 10 à 12, **caractérisé en ce que** les points d'attache (11b') des éléments de fixation de support libre (11) au récipient extérieur (1, 1') sont situés plus près du centre (Z) du récipient intérieur (2, 2') que les points d'attache (11a') des éléments de fixation (11') à l'anneau de support libre (10').

17. Agencement de récipients (20, 21, 21', 22, 22', 23, 24, 25, 26, 27) selon l'une quelconque des revendications précédentes, **caractérisé en ce que** les éléments de fixation de support fixe (5, 5', 5", 5''') et, éventuellement, les éléments de fixation de support libre (11, 11') sont formés en matériaux composites fibreux, de préférence avec des fibres d'aramide, des fibres de carbone, des fibres de verre, des fibres de basalte ou des combinaisons de celles-là, de préférence avec des fibres d'aramide, qui sont mélangées localement avec des fibres de verre.

18. Agencement de récipients (20, 21, 21', 22, 22', 23, 24, 25, 26, 27) selon l'une quelconque des revendications précédentes, **caractérisé en ce que** les éléments de fixation de support libre sont réalisés sous la forme d'éléments de treillis d'une construction de cadre ou sous forme de plaques ou sous forme de plaques d'une construction de cadre et sont de préférence disposés de façon à reprendre des efforts de cisaillement.

19. Agencement de récipients (20, 21, 21', 22, 22', 23, 24, 25, 26, 27) selon l'une quelconque des revendications précédentes, **caractérisé en ce que** le récipient extérieur et le récipient intérieur sont disposés avec des axes longitudinaux de récipient coaxiaux (L1, L2).

20. Agencement de récipients selon l'une quelconque des revendications précédentes, **caractérisé en ce qu'**au moins un bouclier anti-rayonnement (4) est disposé entre le récipient extérieur (1, 1') et le récipient intérieur (2, 2'), dans lequel de préférence au moins un bouclier anti-rayonnement est monté directement sur des éléments de fixation (5, 5', 5", 5"', 11, 11') du dispositif de suspension.

21. Agencement de récipients selon l'une quelconque des revendications précédentes, **caractérisé en ce qu'**au moins un autre bouclier anti-rayonnement est monté sur ledit au moins un bouclier anti-rayonnement (4).
